# EUROPÄISCHE PATENTSCHRIFT

(11) **EP 1 068 783 B1**
(45) Veröffentlichungstag und Bekanntmachung des Hinweises auf die Patenterteilung: **11.08.2004**
(21) Anmeldenummer: 00111593.0
(22) Anmeldetag: 31.05.2000
(51) Int. Cl.: A01C 15/00, A01C 17/00

(54) **Zweischeibenschleuderstreuer**
Two disk centrifugal spreader
Epandeur centrifuge à deux disques

(30) Priorität: 04.06.1999 DE 19925538
(43) Veröffentlichungstag der Anmeldung: 17.01.2001
(73) Patentinhaber: Amazonen-Werke H. Dreyer GmbH & Co. KG, 49205 Hasbergen (DE)
(72) Erfinder: Walter, Achim, 49078 Osnabrück (DE)

(56) Entgegenhaltungen:
- EP-A- 0 309 062
- EP-A- 0 532 055
- EP-A- 0 613 613
- WO-A-98/34461

## Beschreibung

Die Erfindung betrifft einen Zweischeibenschleuderstreuer gemäß der Oberbegriffe der Ansprüche 1 und 2.

Ein derartiger Zweischeibenstreuer ist beispielsweise durch EP 06 13 613 A1 bekannt geworden. Bei diesen bekannten Zweischeibenstreuer sind die unteren Abschnitte des Wurfscheibenschutzes horizontal ausgerichtet, so daß Material und Flüssigkeit auf diesen unteren Abschnitten verharren und nicht ablaufen können.

Der Erfindung liegt die Aufgabe zugrunde, hier auf einfache Weise Abhilfe zu schaffen.

Diese Aufgabe wird erfindungsgemäß dadurch gelöst, daß die unteren Abschnitte nach unten geneigt und nicht auf eine horizontale Fläche oder Abschnitt auslaufen. Infolge dieser Maßnahmen ist in einfachster Weise sichergestellt, daß das Material von den unteren Abschnitten abfließen kann.

Um sicherzustellen, daß kein Schmutz von den Schlepperrädern auf die unteren Abschnitte fällt, ist vorgesehen, daß die oberen Abschnitte des Wurfscheibenschutzes die unteren Abschnitte nach hinten überragen. Hierdurch bilden die oberen Abschnitte eine Abdeckung für die unteren Abschnitte und die Schleuderscheiben.

Um ein besonders gutes Ablaufen des Materials von den unteren Abschnitten zu erreichen, ist vorgesehen, daß die unteren Abschnitte des Wurfscheibenschutzes jeweils von der Seite des Traktors bis zur Wurfscheibendrehachse geneigt verlaufen. Somit sind die unteren Abschnitte trichterartig nach unten laufend ausgebildet. Versuche haben gezeigt, daß eine Neigung der unteren Abschnitte in bevorzugter Weise zumindest 5° zur Horizontalen betragen sollte.

Um die hintere Quertraverse zu schützen, ist vorgesehen, daß die unteren Abschnitte zumindest bis zu der Quertraverse, vorzugsweise bis über die Hinterkante der hinteren Quertraverse reichen.

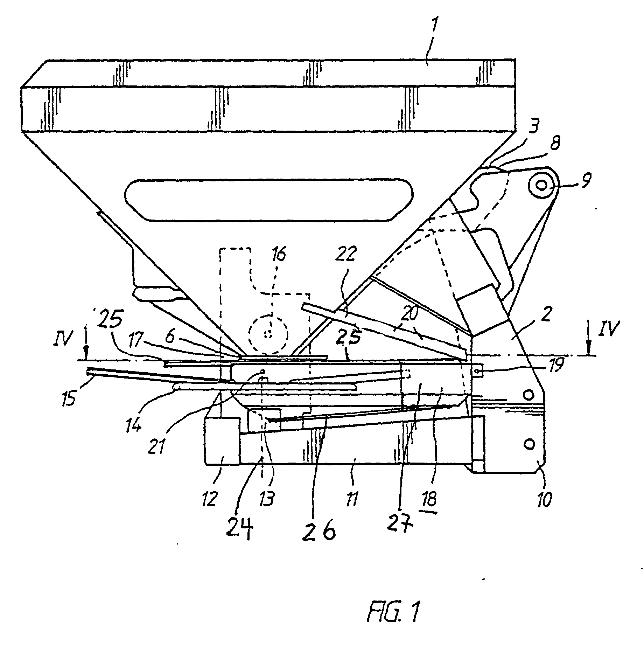

Weitere Einzelheiten der Erfindung sind den übrigen Unteransprüchen, der Beispielsbeschreibung und den Zeichnungen zu entnehmen. Hierbei zeigen
- Fig. 1: den Schleuderdüngerstreuer in der Seitenansicht,

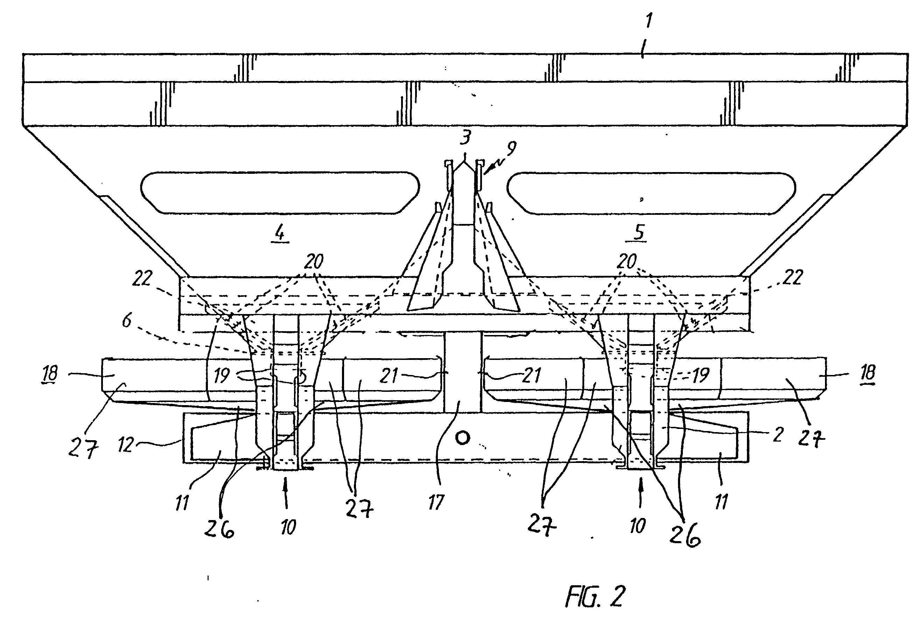

- Fig. 2: den Schleuderdüngerstreuer gemäß Fig. 1 in der Ansicht von vorne,

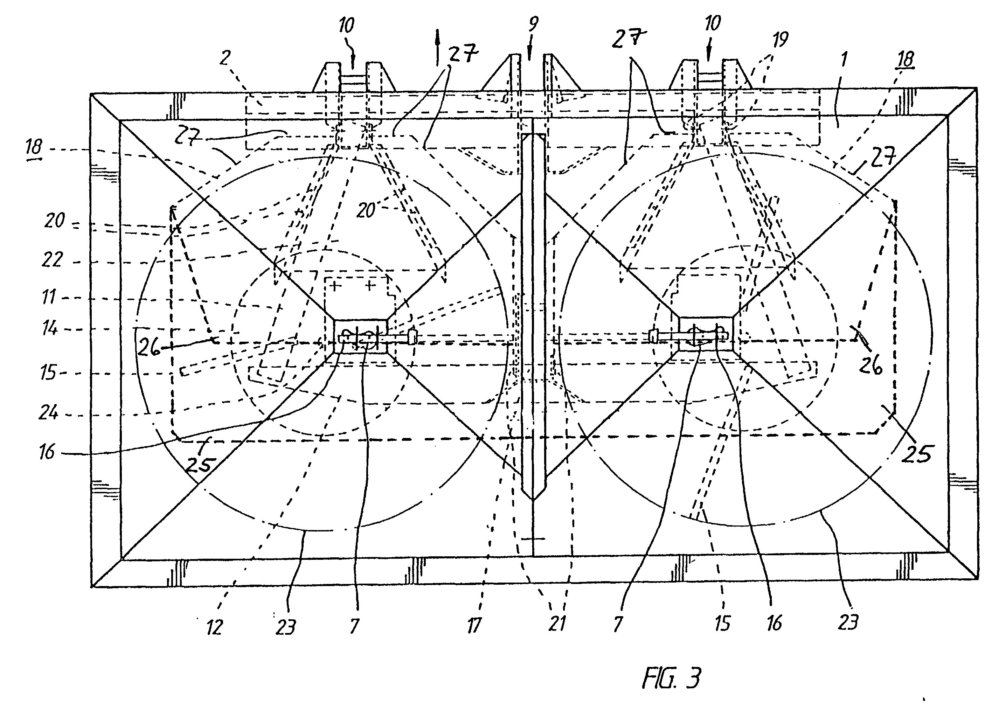

- Fig. 3: den Schleuderdüngerstreuer gemäß der Fig. 1 und 2 in der Draufsicht und

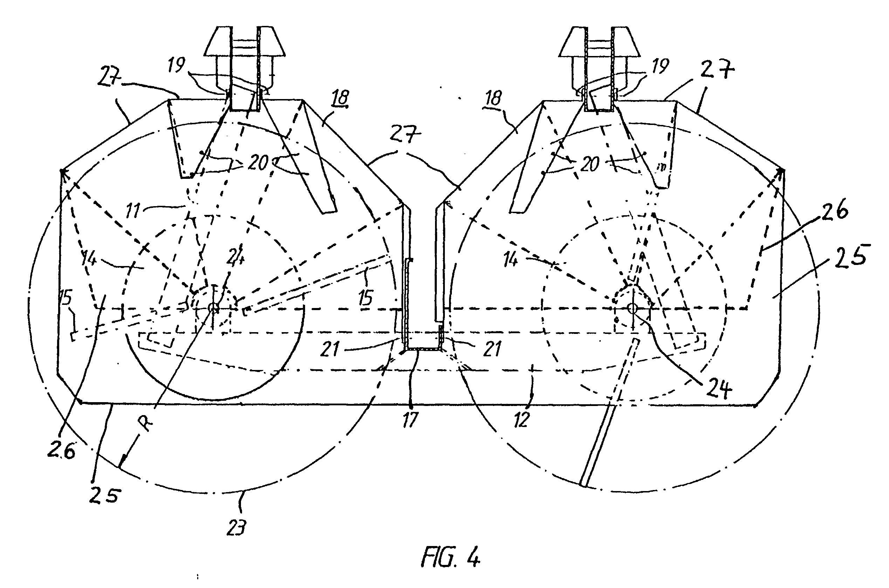

- Fig. 4: den Schleuderdüngerstreuer in der Ansicht IV-IV.

Der Zweischeibenschleuderstreuer ist zum Anbau am Dreipunktgestänge eines Traktors vorgesehen. Der Schleuderdüngerstreuer besteht aus den beiden Bauteilen Vorratsbehälter 1 und Zentralrahmen 2. Der Vorratsbehälter 1 weist die beiden, durch das dachförmige Mittelteil 3 voneinander getrennten Auslauftrichter 4 und 5 auf. Unterhalb jeden Auslauftrichters 4 und 5 ist jeweils die Bodenplatte 6 angeordnet, in welcher sich jeweils die Dosieröffnung 7 befindet, deren Öffnungsweite sich mit Hilfe der sich unterhalb der Bodenplatte 6 befindlichen Schieber in unterschiedlichen Größen einstellen läßt. Das dachförmige Mittelteil 3 ragt nach vorn über den Vorratsbehälter 1 hinaus. An dem vorderen Teil 8 des dachförmigen Mittelteils 3 ist das Oberlenkeranschlußelement 9 befestigt, während die unteren Anschlußelemente 10 der Dreipunktkupplungselemente an dem Zentralrahmen 2 befestigt sind. An den unteren, nach hinten ragenden Trägern 11 ist die Quertraverse 12 angebracht. An dieser Quertraverse 12 sind wiederum die Getriebe 13 angeordnet, über welche die Wurfscheiben 14 angetrieben werden. Die Getriebe 13 werden in bekannter und daher nicht näher dargestellter Weise von einem Mittelgetriebe angetrieben, welches über seine Eingangswelle mittels einer nicht näher dargestellten Gelenkwelle mit der Zapfwelle des Schleuderdüngerstreuers transportierenden Ackerschlepper verbunden ist. Die Wurfscheiben 14 sind jeweils mit den unterschiedlich lang ausgebildeten Wurfelemente 15 bestückt. In dem unteren Bereich der Auslauftrichter 4 und 5 ragt durch die Wand des dachförmigen Mittelteils 3 jeweils die Rührwelle 16 in den Vorratsbehälter hinein. Die Rührwelle 16 wird über einen nicht näher dargestellten Kettentrieb vom Mittelgetriebe aus angetrieben, wobei sich der Kettentrieb in dem kastenförmig ausgebildeten Kettenschacht 17 befindet. Die Wurfscheiben 14 sind auf ihrer dem Schlepper zugewandten Seite jeweils von einem Wurfscheibenschutz 18 umgeben. Dieser Wurfscheibenschutz 18 weist die Befestigungspunkt 19, 20 und 21 auf. Der Zentralrahmen 2 ist über die Strebe 22 mit den Vorratsbehälter 1 verbunden. Die auf den Wurfscheiben 14 angeordneten Wurfelemente 15 weisen die Umlaufbahn 23, deren Radius R von der Rotationsachse 24 sich aus der Länge des längsten, auf der jeweiligen Wurfscheibe 14 angeordneten Wurfelementes 15 ergibt. Die Umlaufbahn 23 der Wurfelemente 15 der Schleuderscheibe 14 weist einen größeren Radius R von der Rotationsachse 24 als die Wurfscheibe 14 auf.

Der Wurfscheibenschutz 18 weist die oberen Abschnitte 25 und die unteren Abschnitte 26 auf, welche im vorderen Bereich durch die vertikal angeordneten Abschnitte 27 miteinander verbunden sind, so daß die unteren Abschnitte 26, die oberen Abschnitte 25 und vorderen Abschnitte 27 einen radkastenartigen Wurfscheibenschutz bilden. Die unteren Abschnitte 26 laufen nach unten geneigt und nicht auf einer horizontalen Fläche aus, wie die Zeichnungen zeigen. Hierbei überragen die oberen Abschnitte 25 des Wurfscheibenschutzes 18 über die unteren Abschnitte 26 nach hinten hinaus. Die unteren Abschnitte 26 des Wurfscheibenschutzes 18 verlaufen jeweils von außen nach innen unten zur Wurfscheibenachse 24 geneigt. Hierbei sind die unteren Abschnitte 26 trichterartig nach unten auslaufend angeordnet. Die Neigung der unteren Abschnitte 26 beträgt zur Horizontalen zumindest etwa 5°. Die untere Abschnitte 26 können zumindest bis zur hinteren Quertraverse reichen, vorzugsweise reichen sie bis über die Hinterkante der Quertraverse 12 in einer bevorzugten Ausführung, wie jedoch in den Zeichnungen nicht gezeigt ist.

## Patentansprüche

1. Zweischeibenschleuderstreuer zum Anbau am Dreipunktgestänge eines Traktors mit trichterförmigen Streugutbehälter (1) mit wenigstens zwei Dosieröffnungen im Behälterboden, je einer unterhalb jeder Dosieröffnung angeordneten Wurfscheibe (14), die das Streugut in Form eines Streufächers verläßt, einer den Behälter (1) aufnehmenden Tragkonstruktion mit zwei etwa parallel zur Fahrtrichtung angeordneten Hauptträgern aus etwa vertikalen Trägern im Bereich der Vorderwand des Vorratsbehälters (1) und sich nach hinten erstreckenden Tragarmen, die im hinteren Bereich durch eine das Getriebe für die Wurfscheiben (14) aufnehmende Quertraverse verbunden sind, und mit einem Wurfscheibenschutz (18), der mit vertikalen Abschnitten (27) die beiden Wurfenscheiben (14) nach vorne gegen den Traktor abschirmt und sich mit etwa in horizontaler Ebene erstreckenden oberen und unteren, die Wurfscheiben (14) ober- und unterseitig zumindest teilweise über- bzw. untergreifenden Abschnitten (25,26), **dadurch gekennzeichnet, daß** die unteren Abschnitte (26) nach unten geneigt und nicht auf eine horizontale Fläche oder Abschnitt auslaufen.

2. Schleuderdüngerstreuer nach Anspruch 1, **dadurch gekennzeichnet, daß** die unteren Abschnitte (26) des Wurfscheibenschutzes (18) jeweils von der Seite des Traktors bis zur Wurfscheibendrehachse (24) geneigt verlaufen.

3. Schleuderdüngerstreuer nach Anspruch 1, **dadurch gekennzeichnet, daß** die unteren Abschnitte (26) trichterartig nach unten auslaufen.

4. Schleuderstreuer nach Anspruch 1, **dadurch gekennzeichnet, daß** die Neigung der unteren Abschnitte (26) zumindest 5° zur Horizontalen beträgt.

5. Schleuderdüngerstreuer nach einem oder mehreren der vorstehenden Ansprüche, **dadurch gekennzeichnet, daß** die oberen Abschnitte des Wurfscheibenschutzes die unteren Abschnitte (26) nach hinten überragen.

6. Schleuderstreuer nach einem oder mehreren der vorstehenden Ansprüche, **dadurch gekennzeichnet, daß** die unteren Abschnitte (26) zumindest bis zur hinteren Quertraverse (12), vorzugsweise bis über die Hinterkante der hinteren Quertraverse (12) reichen.

## Claims

1. Twin-disc centrifugal broadcaster for attachment to the three-point linkage means of a tractor provided with a funnel-shaped broadcasting means container (1) having at least two metering openings in the container floor, a respective throwing disc (14) disposed below each metering opening, which throwing disc (14) is left by the broadcasting material in the form of a broadcasting compartment, a support construction accommodating the container (1) being provided with two main supports, which are disposed substantially parallel to the direction of travel and are in the form of substantially vertical supports in the region of the front wall of the hopper (1) and support arms, which extend rearwardly and are connected in the rear region by means of a transverse cross-arm accommodating the transmission means for the throwing discs (14), and having a throwing disc protecting means (18), which screens the two throwing discs (14) in a forwards manner relative to the tractor by means of vertical portions (27) and has upper and lower portions (25, 26), which extend substantially in the horizontal plane and extend beyond or respectively not as far as the throwing discs (14) at the top and bottom at least partially, **characterised in that** the lower portions (26) are inclined downwards and do not run out onto a horizontal face or portion.

2. Centrifugal fertiliser broadcaster according to claim 1, **characterised in that** the lower portions (26) of the throwing disc protecting means (18) extend in an inclined manner respectively from the side of the tractor as far as the axis of rotation (26) of the throwing disc.

3. Centrifugal fertiliser broadcaster according to claim 1, **characterised in that** the lower portions (26) run out downwards in the form of a funnel.

4. Centrifugal broadcaster according to claim 1, **characterised in that** the inclination of the lower portions (26) is at least 5° relative to the horizontal.

5. Centrifugal fertiliser broadcaster according to one or more of the preceding claims, **characterised in that** the upper portions of the throwing disc protecting means overlap the ends of the lower portions (26).

6. Centrifugal broadcaster according to one or more of the preceding claims, **characterised in that** the lower portions (26) extend at least as far as the rear transverse cross-beam (12), preferably as far as beyond the rear edge of the rear transverse cross-beam (12).

## Revendications

1. Epandeur centrifuge à deux disques destiné à être monté sur l'attelage à trois points d'un tracteur, comprenant un réservoir de produit à épandre (1) en forme de trémie, qui comprend au moins deux ouvertures de dosage dans le fond du réservoir, un disque de projection (14) disposé au-dessous de chaque ouverture de dosage et qui projette le produit à épandre sous la forme d'un éventail d'épandage, une construction porteuse qui reçoit le réservoir (1) et possède deux poutres principales disposées à peu près parallèlement à la direction de la marche et formées de poutres à peu près verticale dans la région de la paroi avant du réservoir (1) et deux bras porteurs qui s'étendent vers l'arrière et sont reliés dans la région arrière par une traverse transversale qui reçoit le renvoi pour les disques de projection (14) et une protection des disques de projection (18) qui forme écran avec des segments verticaux (27) pour les deux disques de projection (14) vers l'avant en direction du tracteur, et des segments supérieurs et inférieurs (25, 26) s'étendant à peu près dans le plan horizontal qui recouvrent au moins partiellement par dessus et par dessous les disques de projection (14) sur la face supérieure et la face inférieure,
**caractérisé en ce que**
les segments inférieurs (26) s'étendent en pente vers le bas et non pas sur une surface horizontale ou sur un segment horizontal.

2. Epandeur d'engrais centrifuge selon la revendication 1,
**caractérisé en ce que**
les segments inférieurs (26) de la protection des disques de projection (18) s'étendent en pente, chacun à partir d'un côté du tracteur jusqu'à l'axe de rotation des disques de projection (24).

3. Epandeur d'engrais centrifuge selon la revendication 1,
**caractérisé en ce que**
les segments inférieurs (26) s'étendent vers le bas en forme d'entonnoir.

4. Epandeur centrifuge selon la revendication 1,
**caractérisé en ce que**
la pente des segments inférieurs est d'au moins 5° sur l'horizontale.

5. Epandeur d'engrais centrifuge selon une ou plusieurs des revendications précédentes,
**caractérisé en ce que**
les segments supérieurs de la protection des disques de projection débordent vers l'arrière au-delà des segments inférieurs (26).

6. Epandeur centrifuge selon une ou plusieurs des revendications précédentes,
**caractérisé en ce que**
les segments inférieurs (26) s'étendent au moins jusqu'à la traverse transversale arrière (12), de préférence jusqu'au-delà du bord arrière de la traverse transversale arrière (12).
